# EUROPÄISCHE PATENTSCHRIFT

(11) **EP 3 139 107 B1**
(45) Veröffentlichungstag und Bekanntmachung des Hinweises auf die Patenterteilung: **28.08.2019**
(21) Anmeldenummer: 15183857.0
(22) Anmeldetag: 04.09.2015
(51) Int. Cl.: F24H 7/02, F24H 7/04, F28D 20/00

(54) **WÄRMESPEICHERVORRICHTUNG UND VERFAHREN ZUM BETREIBEN EINER WÄRMESPEICHERVORRICHTUNG**
THERMAL STORAGE DEVICE AND METHOD FOR OPERATING A THERMAL STORAGE DEVICE
DISPOSITIF DE STOCKAGE DE CHALEUR ET PROCEDE DE FONCTIONNEMENT D'UN DISPOSITIF DE STOCKAGE DE CHALEUR

(43) Veröffentlichungstag der Anmeldung: 08.03.2017
(73) Patentinhaber: Lumenion GmbH, 10829 Berlin (DE)
(72) Erfinder: Zwinkels, Andrew, 10827 Berlin (DE)
(74) Vertreter: Ridderbusch, Oliver

(56) Entgegenhaltungen:
- WO-A1-2015/085357
- DE-A1- 2 238 611
- DE-A1-102009 040 147
- DE-A1-102011 007 335
- FR-A1- 2 702 830
- JP-A- 2008 224 066

## Beschreibung

Die Erfindung betrifft gemäß Anspruch 1 eine Wärmespeichervorrichtung zum Speichern von elektrischer Energie in Form von Wärmeenergie. Außerdem betrifft die Erfindung gemäß Anspruch 15 ein Verfahren zum Betreiben einer Wärmespeichervorrichtung zum Speichern von elektrischer Energie in Wärmeenergie.

Insbesondere durch die verstärkte Nutzung regenerativer Energiequellen schwankt die Gesamtmenge an erzeugter elektrischer Energie zeitlich stark. Dadurch kann die verfügbare elektrische Energie einen momentanen Bedarf erheblich übertreffen. Insbesondere in solchen Fällen ist es wünschenswert, erzeugte elektrische Energie zu speichern. Die wünschenswerterweise zu speichernden Energiemengen sind beträchtlich. Energiespeicher, die Energie in beispielsweise elektrischer Form oder chemischer Form speichern (wie zum Beispiel elektrochemische Batterien oder Kondensatoren) können zu vertretbaren Kosten aber nur verhältnismäßig geringe Energiemengen speichern. Um größere Energiemengen zu speichern, werden auch Pumpspeicherwerke genutzt. Diese erfordern jedoch einen großen Höhenunterschied, was in der Regel nur in Gebirgsregionen umsetzbar ist.

Demgegenüber können verhältnismäßig große Energiemengen zu moderaten Kosten mit gattungsgemäßen Wärmespeichervorrichtungen gespeichert werden, welche elektrische Energie zunächst in Wärmeenergie umwandeln und diese sodann speichern. Eine solche Wärmespeichervorrichtung umfasst elektrische Heizmittel zum Umwandeln elektrischer Energie in Wärmeenergie, Wärmespeichermittel zum Aufnehmen und Speichern von Wärmeenergie der elektrischen Heizmittel sowie Wärmetauschermittel zum Ausgeben von Wärmeenergie, wobei die Wärmetauschermittel Leitungen für ein Arbeitsfluid aufweisen zum Übertragen von Wärmeenergie vom Wärmespeichermedium auf das Arbeitsfluid.

In entsprechender Weise umfasst ein gattungsgemäßes Verfahren zum Betreiben einer Wärmespeichervorrichtung zum Speichern von elektrischer Energie in Wärmeenergie die Schritte, dass mit elektrischen Heizmitteln elektrische Energie in Wärmeenergie umgewandelt wird, dass mit Wärmespeichermitteln Wärmeenergie der elektrischen Heizmittel aufgenommen und gespeichert wird sowie des mit Wärmetauschermitteln, welche Leitungen für ein Arbeitsfluid aufweisen, Wärmeenergie vom Wärmespeichermedium auf das Arbeitsfluid übertragen wird.

Eine gattungsgemäße Wärmespeichervorrichtung ist beispielsweise von der Anmelderin in der europäischen Patentanmeldung mit der Anmeldenummer 14 187 148.3 beschrieben. Diese bekannte Wärmespeichervorrichtung nutzt zur Energiespeicherung einen Phasenübergang eines Metalls als Wärmespeichermittel. Beispielsweise kann der Phasenübergang fest-flüssig von Aluminium genutzt werden. Vorteilhafterweise können hiermit sehr große Energiemengen bei einem moderaten Gewicht und Volumen gespeichert werden. Wünschenswert dabei wäre jedoch, die Skalierbarkeit weiter zu verbessern und die Kosten weiter zu senken.

Andere Wärmespeicher sind beispielsweise aus DE 10 2013 004 330 A1, DE 10 2008 030 212 A1 und DE 11 2012 002 387 T5 bekannt.

WO 2015/085357 A1 beschreibt einen Wärmespeicher, bei dem mit elektrischen Heizmitteln Wärmeenergie aus elektrischer Energie gewonnen und in den Wärmespeicher eingebracht wird. Zudem sind Wärmetauscherleitungen vorhanden; die von einer Hülle mit einem Graphitkörper zur Wärmespeicherung umgeben sind. Dieses Dokument zeigt die Merkmale des Oberbegriffs des Anspruchs 1.

FR 2 702 830 A1 betrifft einen Wärmespeicher, welcher plattenförmige elektrische Heizer und plattenförmige Wärmetauscher umfasst, welche übereinander gestapelt sind.

DE 10 2011 007 335 A1 beschreibt Wärmespeichermodule, bei denen Wärmeenergie über einen Wärmetauscher, der z.B. Heizwasser, Thermoöl oder Dampf leitet, eingebracht und auch entnommen wird. Gespeichert wird die Wärme in Wärmespeicherblöcken. Dieses Dokument zeigt ebenfalls die Merkmale des Oberbegriffs des Anspruchs 1.

DE 10 2009 040 147 A1 betrifft einen elektrochemischen Energiespeicher mit galvanischen Zellen. An den galvanischen Zellen entsteht Abwärme, welche über Wärmeleitkörper von den galvanischen Zellen wegführt wird.

Als eine **Aufgabe** der Erfindung kann angesehen werden, eine Wärmespeichervorrichtung und ein Verfahren zum Betreiben einer Wärmespeichervorrichtung anzugeben, welche bei einem kostengünstigen Aufbau eine leichte Skalierbarkeit der Wärmespeichervorrichtung ermöglichen.

Diese Aufgabe wird durch die Wärmespeichervorrichtung gemäß Anspruch 1 sowie durch das Verfahren mit den Merkmalen des Anspruchs 15 gelöst.

Vorteilhafte Ausgestaltungen der erfindungsgemäßen Wärmespeichervorrichtung und des erfindungsgemäßen Verfahrens sind Gegenstand der abhängigen Ansprüche und werden in der folgenden Beschreibung erläutert.

Bei Wärmespeichervorrichtungen der oben genannten Art ist erfindungsgemäß vorgesehen, dass die Wärmetauschermittel mindestens eine, vorzugsweise mehrere, plattenförmige Wärmetauschereinheiten aufweisen, welche jeweils mehrere der vorgenannten Leitungen für das Arbeitsfluid umfassen. Die Wärmespeichermittel umfassen mindestens eine, vorzugsweise mehrere, plattenförmige Wärmespeichereinheiten. Die elektrischen Heizmittel umfassen mindestens eine, vorzugsweise mehrere, plattenförmige elektrische Heizeinheiten. Die mindestens eine plattenförmige Wärmetauschereinheit, die mindestens eine plattenförmige Wärmespeichereinheit und die mindestens eine plattenförmige elektrische Heizeinheit sind übereinander zu einem Stapel angeordnet.

Bei dem Verfahren zum Betreiben einer Wärmespeichervorrichtung der eingangs beschriebenen Art ist erfindungsgemäß vorgesehen, dass die Wärmetauschermittel mindestens eine, vorzugsweise mehrere, plattenförmige Wärmetauschereinheiten aufweisen, welche jeweils mehrere der Leitungen für Arbeitsfluid enthalten, dass die Wärmespeichermittel mindestens eine, vorzugsweise mehrere, plattenförmige Wärmespeichereinheiten aufweisen, dass die elektrischen Heizmittel mindestens eine, vorzugsweise mehrere, plattenförmige elektrische Heizeinheiten aufweisen, dass die mindestens eine plattenförmige Wärmetauschereinheit, die mindestens eine plattenförmige Wärmespeichereinheit und die mindestens eine plattenförmige elektrische Heizeinheit übereinander zu einem Stapel angeordnet sind.

Als ein Kerngedanke der Erfindung kann angesehen werden, dass die wesentlichen Komponenten der Wärmespeichervorrichtung (das heißt die Wärmetauschereinheit(en), die Wärmespeichereinheit(en) und die elektrische Heizeinheit(en)) jeweils eine Plattenform haben und übereinander gestapelt sind. Eine Plattenform ermöglicht zunächst eine große Kontaktfläche zwischen den vorgenannten Komponenten, wodurch ein Wärmetransfer effizient möglich ist. Eine Stapelung erlaubt zudem, dass eine für die jeweilige Anwendung geeignete Anzahl der vorgenannten Komponenten verhältnismäßig leicht variiert werden kann. Somit kann die Energiespeicherkapazität leicht verändert, das heißt skaliert, werden und es sind insbesondere sehr große Speicherkapazitäten möglich. Eine Stapelung übereinander ist hinsichtlich der thermischen Ausdehnung der genannten Komponenten wichtig und vorteilhaft. So besteht im Allgemeinen die Gefahr, dass aufgrund thermischer Ausdehnungen elektrische Verbindungen und/oder Fluidleitungen stark belastet werden können, womit die Lebensdauer sinkt. Bei übereinander angeordneten Platten ist jedoch die thermische Ausdehnung in Stapelungsrichtung verhältnismäßig gering, da die Plattenform definitionsgemäß eine geringe Höhe im Vergleich zur Breite und Länge vorgibt.

Allgemein kann die Stapelung übereinander so verstanden werden, dass die genannten plattenförmigen Komponenten jeweils mit ihrer Grundfläche (das heißt ihrer größten Seite) einander berühren. Eine Absolutrichtung der Stapelung ist somit durch eine Ausrichtung der plattenförmigen Komponenten gegeben. So ist es grundsätzlich auch möglich, dass die plattenförmigen Komponenten auf einer ihrer schmalen Seiten stehen und die Stapelungsrichtung somit in horizontaler oder waagerechter Richtung steht. Wie später näher beschrieben wird, kann es aber bevorzugt sein, dass die plattenförmigen Komponenten mit ihrer Grundseite oder -fläche auf einem Untergrund stehen, so dass eine Stapelungsrichtung vertikal ist oder nach oben zeigt. Dies kann insbesondere hinsichtlich der Strömungseigenschaften des Arbeitsfluids vorteilhaft sein.

Als kleinstmögliche Ausführung der erfindungsgemäßen Wärmespeichervorrichtung kann diese genau eine plattenförmige Wärmetauschereinheit, eine plattenförmige Wärmespeichereinheit und eine plattenförmige Wärmespeichereinheit umfassen. Diese sind übereinander gestapelt, wobei eine Wärmespeichereinheit vorzugsweise zwischen einer elektrische Heizeinheit und einer Wärmetauschereinheit angeordnet ist. Um größere Energiespeicherkapazitäten bereit zu stellen, ist es aber bevorzugt, dass jeweils mehrere der vorgenannten plattenförmigen Komponenten (also der Wärmespeichereinheiten, Wärmetauschereinheiten und Heizeinheiten) übereinander gestapelt sind.

In der folgenden Beschreibung wird in der Regel die Pluralform von Wärmetauschereinheiten, Wärmespeichereinheiten und Heizeinheiten verwendet. Diese Beschreibungen sollen dahingehend verstanden werden, dass die erläuternden Eigenschaften auch auf Ausführungen zutreffen, bei denen die Wärmespeichervorrichtung nur eine Wärmespeichereinheit, nur eine Wärmetauschereinheit und nur eine Heizeinheit umfasst.

Die plattenförmigen Wärmespeichereinheiten sind vorzugsweise jeweils einstückig gebildet und können aus einem prinzipiell beliebigen Festkörper bestehen, sofern dessen spezifische Wärmekapazität und Wärmeleitfähigkeit der beabsichtigten Anwendung genügen. Erfindungsgemäß umfasst jede Wärmespeichereinheit eine Metallplatte oder ist insbesondere durch genau eine Metallplatte gebildet. Als Metall kann insbesondere Stahl oder eine Stahllegierung verwendet werden. Bei verhältnismäßig geringen Kosten stellen diese eine relativ hohe spezifische Wärmekapazität und Wärmeleitfähigkeit zur Verfügung.

Die genannten plattenförmigen Komponenten können insbesondere übereinander gelegt sein, ohne dass zusätzliche Verbindungs- oder Befestigungsmittel vorhanden sind. So können diese Komponenten durch ihr Eigengewicht zusammenhalten und können gleichzeitig thermischen Ausdehnungen nachgeben. Prinzipiell können aber auch zusätzliche Befestigungsmittel vorhanden sein. Zwischen den plattenförmigen Komponenten kann ein Wärmeleitmittel, beispielsweise ein Wärmeleitgel oder eine Wärmeleitpaste vorhanden sein. Es kann aber auch bevorzugt sein, wenn die vorgenannten plattenförmigen Komponenten ohne andere Mittel direkt aufeinander liegen, wobei durch die Plattenform vorteilhafterweise eine große und in der Regel luftspaltfreie Kontaktfläche bereitgestellt wird.

Unter elektrischen Heizmitteln können prinzipiell beliebige Mittel aufgefasst werden, welche dazu eingerichtet sind, elektrische Energie (möglichst vollständig) in Wärmeenergie umzuwandeln. Beispielsweise können hierzu Widerstandselemente verwendet werden.

Die Wärmetauschermittel umfassen Leitungen, also Röhren, welche in thermischer Verbindung zu einer der Wärmespeichereinheiten angeordnet sind. Ein Arbeitsfluid, welches erhitzt werden soll, strömt demnach nicht frei an die Wärmespeichereinheiten, sondern wird in den Leitungen geführt.

Um die genannte Plattenform zu erzeugen, können die Wärmetauschereinheiten und/oder die elektrischen Heizeinheiten über einen Wärmeleitkörper verfügen. Dieser kann die genannten Komponenten nach außen begrenzen und eine Plattenform haben. Die Wärmeleitkörper sind vorzugsweise aus Metall und können aus dem gleichen Material wie die Wärmespeichereinheiten sein. Bei einer bevorzugten Ausführungsform umfasst jede elektrische Heizeinheit mehrere elektrische Heizelemente und einen Wärmeleitkörper. Dabei umgibt der Wärmeleitkörper die elektrischen Heizelemente, insbesondere direkt kontaktierend, und hat eine Plattenform. Alternativ oder zusätzlich kann jede Wärmetauschereinheit ebenfalls einen Wärmeleitkörper sowie Leitungen für das Arbeitsfluid umfassen. Analog umgibt hier der Wärmeleitkörper die Leitungen, insbesondere direkt kontaktierend, und hat eine Plattenform. Bei diesen Ausführungen kann in einfacher Weise die gewünschte Plattenform erreicht werden. Die vorgenannten elektrischen Heizelemente wandeln elektrische Energie in Wärme um und können beispielsweise Widerstandselemente sein.

Jeder Wärmeleitkörper von einer der elektrischen Heizeinheiten kann einen oberen Wärmeleitkörper und einen unteren Wärmeleitkörper umfassen, welche aufeinander gesetzt sind und dazwischen die elektrischen Heizelemente aufnehmen. Insbesondere können der obere und der untere Wärmeleitkörper eine Innenform haben, welche gerade einer Außenform der elektrischen Heizelemente entspricht. So können die elektrischen Heizelemente im Wesentlichen frei von Hohlräumen in den oberen und unteren Wärmeleitkörper aufgenommen werden. Somit ist ein besonders guter Wärmetransfer möglich. Diese Eigenschaften des Wärmeleitkörpers können alternativ oder ergänzend in analoger Weise für jeden Wärmeleitkörper von einer der Wärmetauschereinheiten gelten, wobei hier jeder Wärmeleitkörper einen oberen Wärmeleitkörper und einen unteren Wärmeleitkörper umfasst, welche aufeinandergesetzt sind und dazwischen die Leitungen für das Arbeitsfluid aufnehmen.

Die genannte Plattenform kann insbesondere eine Quader sein. Die Platte oder der Quader hat eine Grundfläche sowie eine Höhe, wobei die Höhe sehr gering im Vergleich zu den Abmessungen der Grundfläche ist, insbesondere höchstens zehn Prozent oder höchstens fünf Prozent der Größe dieser Abmessungen.

Es kann bevorzugt sein, dass die plattenförmigen Wärmespeichereinheiten, die plattenförmigen Wärmetauschereinheiten und die plattenförmigen elektrischen Heizeinheiten jeweils eine übereinstimmende Grundfläche aufweisen. Indem die Grundflächen die gleichen Abmessungen haben, führt eine Stapelung zu einem besonders effizienten Wärmetransfer. Als Grundfläche kann sowohl eine Ober- als auch eine Unterseite der Plattenform angesehen werden. Ober- und Unterseite sind im Wesentlichen parallel zueinander und haben im Wesentlichen die gleichen Abmessungen.

Die Wärmespeichereinheiten, Wärmetauschereinheiten und elektrischen Heizeinheiten können jeweils eine Höhe und eine Grundfläche mit einer Breite und einer Länge aufweisen, wobei jeweils die Breite und Länge mindestens fünf Mal, vorzugsweise mindestens zehn Mal, so groß sind wie die Höhe.

Prinzipiell kann die Grundfläche der Plattenform eine beliebige Form haben, beispielsweise rund oder kreisförmig, eckig, insbesondere rechtwinklig oder quadratisch. Eine Rechteckform kann bevorzugt sein, um elektrische Heizelemente und die Leitungen des Arbeitsfluids in einfacher Weise so gestalten zu können, dass diese mit ihren Außenabmessungen im Wesentlichen die gesamte Grundfläche abdecken. Insbesondere bei einer rechteckförmigen Grundfläche ist die Länge der Grundfläche vorzugsweise mindestens doppelt so groß wie die Breite der Grundfläche. Dies kann sinnvoll sein für eine kostengünstige und gleichzeitig großflächige Gestaltung der elektrischen Heizelemente und der Leitungen für das Arbeitsfluid. Beispielsweise können die Leitungen jeder Wärmetauschereinheit in Längsrichtung der Grundfläche verlaufen, also entlang der längeren Seite der Grundfläche, wobei mehrere Leitungen parallel zueinander angeordnet sind. Bei einer im Vergleich zur Breite großen Länge ist gleichwohl keine übermäßig große Anzahl an Leitungen erforderlich, da diese Anzahl allein durch die verhältnismäßig geringe Breite der Grundfläche gegeben ist. Ähnliches gilt für die elektrischen Heizelemente, wenn diese stabförmig ausgeführt sind, also sich in Längsrichtung der Grundfläche erstrecken und parallel zueinander angeordnet sind.

Der Stapel der Wärmespeichervorrichtung kann mehrere übereinander angeordnete Stapeleinheiten umfassen, wobei jede Stapeleinheit von unten nach oben die folgenden Komponenten umfasst: eine der Wärmetauschereinheiten; eine der Wärmespeichereinheiten; eine der elektrischen Heizeinheiten und eine der Wärmespeichereinheiten. Auf die letztgenannte Wärmespeichereinheit dieser Stapeleinheit folgt somit die Wärmetauschereinheit einer nächsten Stapeleinheit. Durch eine solche Anordnung grenzt eine Heizeinheit stets an zwei Wärmespeichereinheiten an, so dass Wärme besonders effektiv übertragen werden kann. Zudem ist durch diese Anordnung definiert, dass jede der Wärmespeichereinheiten sowohl an eine Wärmetauschereinheit als auch an eine elektrische Heizeinheit angrenzt, so dass jede Wärmespeichereinheit effektiv geladen und entladen werden kann (d. h. Wärme aufnehmen und Wärme abgeben kann).

In anderen Worten kontaktiert jede Wärmespeichereinheit nach oben eine der elektrischen Heizeinheiten und nach unten eine der Wärmetauschereinheiten.

Sowohl nach oben als auch nach unten wird der Stapel vorzugsweise durch jeweils eine der plattenförmigen Wärmetauschereinheiten begrenzt. Demnach befinden sich oberhalb der obersten Wärmetauschereinheit keine elektrische Heizeinheit und keine Wärmespeichereinheit. Ebenso befinden sich unterhalb der untersten Wärmetauschereinheit keine elektrische Heizeinheit und keine Wärmespeichereinheit. Insgesamt kann somit die Anzahl an Wärmetauschereinheiten um 1 größer sein als die Anzahl an elektrischen Heizeinheiten. Die Anzahl an Wärmespeichereinheiten kann doppelt so groß sein wie der der elektrischen Heizeinheiten. Demnach kann der Stapel zusätzlich zu den vorgenannten Stapeleinheiten eine weitere plattenförmige Wärmetauschereinheit umfassen, welche auf der obersten Stapeleinheit angeordnet ist.

Jede elektrische Heizeinheit kann elektrische Anschlüsse aufweisen, über welche elektrischer Strom von außen zu den elektrischen Heizelementen leitbar ist. Vorzugsweise sind die elektrischen Anschlüsse an einer Seitenwand der zugehörigen elektrischen Heizeinheit angeordnet, also nicht an einer Grundfläche der Plattenform. Alternativ oder ergänzend können in ähnlicher Weise an jeder Wärmetauschereinheit Fluidanschlüsse vorhanden sein, über welche Arbeitsfluid in die Leitungen der jeweiligen Wärmetauschereinheit hinein und wieder heraus leitbar ist. Dabei sind die Fluidanschlüsse vorzugsweise an einer Seitenwand der zugehörigen Wärmetauschereinheit angeordnet. Vorzugsweise sind die elektrischen Anschlüsse und die Fluidanschlüsse an derselben Seite der Wärmespeichervorrichtung angeordnet. Hierdurch ist die Zugänglichkeit für Personal erleichtert, was hinsichtlich des durch die hohen Temperaturen der Wärmespeichervorrichtung erzeugten Gefahrenbereichs bedeutsam ist. Zudem kann eine raumsparende Anordnung erfolgen, bei welcher allein die Seitenwand mit den elektrischen Anschlüssen und den Fluidanschlüssen für Menschen zugänglich ist.

In anderen Worten sind die elektrischen Anschlüsse aller elektrischen Heizeinheiten an einer selben Seitenwand der Wärmespeichervorrichtung angeordnet. Alternativ oder zusätzlich sind an jeder Wärmetauschereinheit Fluidanschlüsse vorhanden, über welche Arbeitsfluid in die Leitungen der jeweiligen Wärmetauschereinheit hinein und wieder heraus leitbar ist, und auch die Fluidanschlüsse aller Wärmetauschereinheiten sind an der derselben vorgenannten Seitenwand der Wärmespeichervorrichtung angeordnet.

Als Arbeitsfluid kann prinzipiell eine beliebige Flüssigkeit oder ein beliebiges Gas verwendet werden. Das Fluid kann insbesondere auch einen Phasenübergang beim Durchströmen einer Wärmetauschereinheit erfahren, also aus einem flüssigen Zustand in die Gasform verdampfen. Beispiele für Arbeitsfluide sind Wasser oder wasserhaltige Lösungen.

Prinzipiell können mehrere der Wärmetauschereinheiten von Arbeitsfluid nacheinander durchströmt werden. Dies kann wünschenswert sein, wenn eine Wärmeübertragung von einer der Wärmetauschereinheiten noch nicht genügt, um das Arbeitsfluid auf eine Zieltemperatur zu erhitzen. Um große Mengen an Wärmeenergie entnehmen zu können, das heißt große Mengen an Arbeitsfluid erhitzen zu können, werden aber vorzugsweise mehrere oder alle der Wärmetauschereinheiten parallel von Arbeitsfluid durchflossen. Das heißt, das Arbeitsfluid wird auf die Wärmetauscher aufgeteilt und durchfließt nicht mehrere Wärmetauschereinheiten nacheinander. Hierfür kann eine gemeinsame Fluidleitung für Arbeitsfluid vorhanden sein, welche sich zu den Leitungen der Wärmetauschereinheiten hin aufzweigt.

An jeder Wärmetauschereinheit können eine Verteilerzuführleitung und eine Verteilerabführleitung vorhanden sein. Die Verteilerzuführleitung kann einen Fluidanschluss zum Einleiten von Arbeitsfluid aufweisen, während die Verteilerabführleitung einen Fluidanschluss zum Wegleiten von Arbeitsfluid aufweisen kann. Die Verteilerzuführleitungen der verschiedenen Wärmetauschereinheiten können insbesondere mit der vorgenannten gemeinsamen Fluidleitung verbunden sein. Vorzugsweise ist bei jeder Wärmetauschereinheit die Verteilerzuführleitung mit einem Teil, insbesondere einer Hälfte, der Leitungen dieser Wärmetauschereinheit verbunden. Die Verteilerabführleitung kann sodann mit dem übrigen Teil, insbesondere der anderen Hälfte, der Leitungen dieser Wärmetauschereinheit verbunden sein. Während die Leitungen jeder Wärmetauschereinheit vorzugsweise in Längsrichtung der Grundfläche verlaufen, stehen die Verteilerzuführleitung und die Verteilerabführleitung vorzugsweise quer, insbesondere senkrecht zur Längsrichtung. Die Leitungen können auf einer Seite, welche der Verteilerzuführleitung und der Verteilerabführleitung gegenüberliegt, durch ein Sammelrohr miteinander verbunden sein. Das Arbeitsfluid kann demnach von der Verteilerzuführleitung durch die erste Hälfte der Leitungen in Längsrichtung strömen und sodann über das Sammelrohr in die zweite Hälfte der Leitungen und in entgegengesetzter Richtung zurückströmen, wo es schließlich in die Verteilerabführleitung gelangt.

Das Sammelrohr kann außerhalb der plattenförmigen Wärmetauschereinheit angeordnet sein, also außerhalb der Grundfläche, welche auch durch die Wärmeleitkörper gegeben ist. Da das Sammelrohr einen größeren Querschnitt als die Leitungen haben muss, kann durch diese Anordnung eine besonders geringe Höhe der Wärmetauschereinheit erreicht werden. Dies ist für die Wärmeübertragung förderlich. Alternativ kann aber auch das Sammelrohr innerhalb des Wärmeleitkörpers der zugehörigen Wärmetauschereinheit aufgenommen sein, womit vorteilhafterweise auch am Sammelrohr eine Wärmeübertragung erfolgen kann. Zudem stehen in diesem Fall Rohrleitungen allein an der schmalen Seite des Wärmeleitkörpers hervor, an dem die Verteilerzuführleitung und die Verteilerabführleitung vorhanden sind. An den übrigen Seitenwänden kann der Stapel durch die Abmessungen des Wärmeleitkörpers begrenzt sein, wodurch insbesondere mehrere Wärmespeichervorrichtungen vorteilhaft nebeneinander angeordnet werden können.

An jeder elektrischen Heizeinheit können elektrische Anschlüsse vorgesehen sein. Insbesondere können für jede der elektrischen Heizelemente einer Heizeinheit separate elektrische Anschlüsse vorhanden sein. Die elektrischen Anschlüsse befinden sich außerhalb der Grundfläche und werden nicht vom Wärmeleitkörper der zugehörigen elektrischen Heizeinheit umgeben. Da die elektrischen Anschlüsse beträchtliche Ströme leiten, kommt es hier zu einer starken Wärmeentwicklung, welche sich nachteilig auf die Lebensdauer der elektrischen Anschlüsse auswirken kann. Um dies zu vermeiden, ist eine effektive Wärmeabfuhr von den elektrischen Anschlüssen vorteilhaft. Zur Wärmeableitung von den elektrischen Anschlüssen umgibt ein Wärmeleitmittel vorzugsweise die elektrischen Anschlüsse und kontaktiert Arbeitsfluidrohre, die mit den Leitungen für das Arbeitsfluid verbunden sind. Bei den Arbeitsfluidrohren kann es sich insbesondere um die Verteilerzuführleitung, die Verteilerabführleitung, die Sammelleitung oder eine von den vorgenannten Leitungen abzweigende Leitung handeln. Das Wärmeleitmittel kann insbesondere durch einen Metallkörper gebildet sein. Bei diesen Ausführungen wird vorteilhafterweise nicht nur eine unerwünscht hohe Temperatur der elektrischen Anschlüsse vermieden, gleichzeitig wird auch ein Arbeitsfluidrohr und damit das darin aufgenommene Arbeitsfluid vorteilhafterweise erhitzt.

Eine gewünschte Aufnahme elektrischer Energie durch die elektrischen Heizeinheiten kann zeitlich variieren, insbesondere abhängig von der Größe eines Überschusses elektrischer Energie im externen Stromnetz, aus welchem die elektrischen Heizeinheiten Energie aufnehmen. Daher ist eine Steuereinheit vorhanden, welche die Aufnahme elektrischer Energie durch die elektrischen Heizmittel steuert. Sollen elektrische Energiemengen aufgenommen werden, welche kleiner als eine maximal mögliche elektrische Energiemenge sind, so werden einzelne elektrische Heizeinheiten mit weniger elektrischer Energie versorgt als andere elektrische Heizeinheiten oder werden komplett abgeschaltet. Es ist bevorzugt, dass in einem solchen Fall die äußersten elektrischen Heizeinheiten (das heißt die oberste und die unterste elektrische Heizeinheit des Stapels) mit weniger elektrischer Energie versorgt werden als die mittigen elektrischen Heizeinheiten. In ähnlicher Weise kann bevorzugt sein, dass in einem solchen Fall eine elektrische Heizeinheit mit umso mehr elektrischer Energie versorgt wird, je näher sie zu einer Mitte des Stapels angeordnet ist. Dadurch wird der Stapel in seiner Mitte stärker erhitzt als am Rand. Dies kann vorteilhaft sein, da sich die Wärmeenergie vom mittleren Bereich allmählich auf die äußeren Bereiche überträgt und dabei nach wie vor im Wärmespeicher gespeichert wird. Hingegen würden bei einer erniedrigten Erhitzung der mittigen Wärmespeichereinheiten und einer verstärkten Erhitzung der äußersten Wärmespeichereinheiten größere Wärmeverluste eintreten.

Die Erfindung betrifft außerdem ein Wärmespeichersystem, welches mehrere Wärmespeichervorrichtungen umfasst. Dabei sind die Wärmespeichervorrichtungen zumindest in einer ersten Reihe und in einer zweiten Reihe angeordnet. Innerhalb einer Reihe sind die Wärmespeichervorrichtungen nebeneinander angeordnet, das heißt in einer Richtung senkrecht zur Stapelungsrichtung. Zudem sind die Wärmespeichervorrichtungen innerhalb einer Reihe so angeordnet, dass sich ihre elektrischen Anschlüsse und Fluidanschlüsse stets an derselben Seite dieser Reihe befinden. Diese Seite kann auch als Zugangsseite oder Vorderseite der jeweiligen Wärmespeichervorrichtung und somit der Reihe an Wärmespeichervorrichtungen bezeichnet werden. Es kann nun vorteilhaft sein, wenn die erste und zweite Reihe so angeordnet sind, dass die Zugangs- oder Vorderseite der ersten Reihe gerade der Zugangs- oder Vorderseite der zweiten Reihe gegenüberliegt. Die Zugangsseiten beider Reihen sind somit einander zugewandt und bilden zwischen einander einen Gang oder Flur, von dem aus eine Person auf sämtliche elektrische Anschlüsse und Fluidanschlüsse aller Wärmespeichervorrichtungen beider Reihen zugreifen kann.

Die als Varianten der erfindungsgemäßen Wärmespeichervorrichtung beschriebenen Eigenschaften sollen auch als Varianten des erfindungsgemäßen Verfahrens aufgefasst werden und umgekehrt. Insbesondere ergeben sich Verfahrensvarianten durch den bestimmungsgemäßen Gebrauch der beschriebenen Ausführungsformen der Wärmespeichervorrichtung und ihrer Komponenten.

Weitere Eigenschaften und Vorteile der Erfindung werden nachstehend mit Bezug auf die beigefügten schematischen Figuren beschrieben.
- Fig. 1: zeigt ein Ausführungsbeispiel einer erfindungsgemäßen Wärmespeichervorrichtung.
- Fig. 2: zeigt eine Wärmetauschereinheit einer erfindungsgemäßen Wärmespeichervorrichtung.
- Fig. 3: zeigt vergrößert einen Ausschnitt der Wärmetauschereinheit von Fig. 2.
- Fig. 4: zeigt eine Wärmetauschereinheit einer weiteren Ausführungsform einer erfindungsgemäßen Wärmespeichervorrichtung.
- Fig. 5: zeigt vergrößert einen Ausschnitt der Wärmetauschereinheit aus Fig. 4.
- Fig. 6: zeigt eine elektrische Heizeinheit einer erfindungsgemäßen Wärmespeichervorrichtung.
- Fig. 7: zeigt eine weitere elektrische Heizeinheit einer erfindungsgemäßen Wärmespeichervorrichtung.
- Fig. 8: zeigt vergrößert einen Ausschnitt der elektrischen Heizeinheit aus Fig. 7.
- Fig. 9: zeigt ein weiteres Ausführungsbeispiel einer erfindungsgemäßen Wärmespeichervorrichtung.
- Fig. 10: zeigt vergrößert einen Ausschnitt der Wärmespeichervorrichtung aus Fig. 9.
- Fig. 11: zeigt schematisch ein Wärmespeichersystem mit zwei erfindungsgemäßen Wärmespeichervorrichtungen.

Gleiche und gleichwirkende Komponenten sind in den Figuren in der Regel mit übereinstimmendem Bezugszeichen gekennzeichnet.

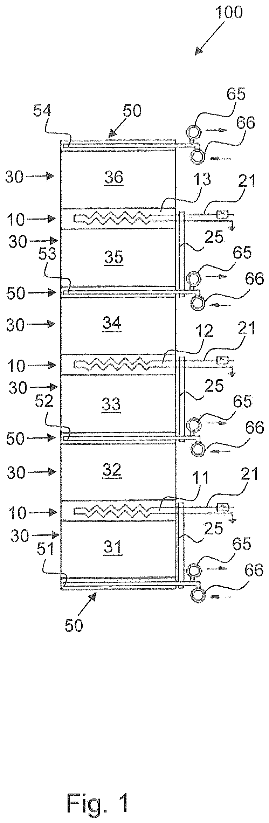

Fig. 1 zeigt schematisch ein Ausführungsbeispiel einer erfindungsgemäßen Wärmespeichervorrichtung 100. Diese umfasst als wesentliche Komponenten mehrere elektrische Heizeinheiten 11, 12, 13, die zusammen auch als elektrische Heizmittel 10 bezeichnet werden, sowie mehrere Wärmespeichereinheiten 31 bis 36, die zusammen auch als Wärmespeichermittel 30 bezeichnet werden, sowie mehrere Wärmetauschereinheiten 51 bis 54, welche gemeinsam auch als Wärmetauschermittel 50 bezeichnet werden.

Die elektrischen Heizeinheiten 11 bis 13 nehmen jeweils elektrische Energie aus einem externen Stromnetz auf, um diese in Wärmeenergie umzuwandeln. Die Wärmeenergie wird sodann auf die jeweils benachbarten Wärmespeichereinheiten 31 bis 36 übertragen. Um die dort gespeicherte Wärmeenergie wieder zu entnehmen, durchströmt ein Arbeitsfluid Leitungen, die in den Wärmetauschereinheiten 51 bis 54 vorhanden sind. Das erhitzte Arbeitsfluid kann sodann in prinzipiell beliebiger Weise genutzt werden.

Insbesondere kann die Wärmeenergie des Arbeitsfluids auch dafür genutzt werden, erneut elektrischen Strom zu erzeugen. Dieser kann sodann in das externe Stromnetz eingespeist werden. Dadurch kann dem externen Stromnetz zu einem Zeitpunkt elektrische Energie entnommen werden, insbesondere wenn ein Überschuss an elektrischer Energie vorhanden ist, und es kann elektrische Energie dem externen Stromnetz zu einem gleichen oder anderen Zeitpunkt zugeführt werden, insbesondere wenn kein Überschuss an elektrischer Energie im externen Stromnetz vorhanden ist.

Als ein wesentliches Merkmal sind die Wärmespeichereinheiten 31 bis 36, die elektrischen Heizeinheiten 11 bis 13 und die Wärmetauschereinheiten 51 bis 54 übereinander gestapelt. Der so gebildete Stapel kann aufgefasst werden als aus Stapeleinheiten bestehend, bei welchen jeweils auf eine Wärmetauschereinheit 51 eine Wärmespeichereinheit 31 folgt, auf welcher sodann eine elektrische Heizeinheit 11 folgt, auf welcher schließlich eine weitere Wärmespeichereinheit 32 folgt. Mehrere solcher Stapeleinheiten können übereinander gestapelt sein, wie beispielhaft in Fig. 1 gezeigt. Auf der obersten Stapeleinheit folgt abschließend vorzugsweise eine Wärmetauschereinheit 54. Indem Wärmetauschereinheiten 50, 54 den Stapel nach oben und unten begrenzen, werden Wärmeverluste minimiert.

Weil bei einer Stapeleinheit die elektrische Heizeinheit 11 sowohl nach unten als auch nach oben an eine Wärmespeichereinheit 31, 32 angrenzt, können bei einem einfachen Aufbau Wärmespeichereinheiten durch verhältnismäßig wenige Heizeinheiten erhitzt werden, wobei zudem ein Wärmetransfer von den Heizeinheiten weg besonders effizient möglich ist.

Als ein weiteres wichtiges Merkmal haben die Wärmetauschereinheiten 51 bis 54, die Wärmespeichereinheiten 31 bis 36 und die elektrischen Heizeinheiten 11 bis 13 jeweils eine Plattenform. Eine Plattenform kann dadurch definiert sein, dass eine Höhe einer solchen Platte (das heißt die Abmessung in Stapelungsrichtung) wesentlich kleiner ist als eine Abmessung (beispielsweise eine Breite, eine Länge oder ein Durchmesser) einer Grundfläche der Platte. In dieser Hinsicht ist Fig. 1 nicht maßstabsgetreu. Dabei kommt in Fig. 1 klarer zur Geltung, dass eine Höhe der plattenförmigen Wärmespeichereinheiten 31 bis 36 größer ist als eine Höhe der plattenförmigen Wärmetauschereinheiten 51 bis 54 und der plattenförmigen elektrischen Heizeinheiten 11 bis 13, insbesondere mindestens doppelt oder dreimal so groß. Eine Plattenform kann eine ebene Unterseite und Oberseite aufweisen. Dadurch ist eine Stapelung leicht möglich und es wird eine große Kontaktfläche zum Wärmetransfer bereitgestellt. Darüber hinaus ermöglicht die Stapelung von Platten einen modularen Aufbau, bei dem die Gesamtzahl an Stapeleinheiten variabel je nach Anwendung aufgebaut werden kann. Zudem wird ein Transport der Komponenten vereinfacht, da jede der genannten plattenförmigen Komponenten separat transportiert und sodann in leichter Weise zur Wärmespeichervorrichtung 100 zusammengesetzt werden kann.

Die Wärmespeichereinheiten 31 bis 36 bestehen jeweils aus Metall oder umfassen Metall. Insbesondere können sie jeweils aus einer einstückigen Metallplatte gebildet sein. Als Metall bieten sich insbesondere Stahl oder eine Stahllegierung an, da diese eine hohe spezifische Wärmespeicherkapazität haben und kostengünstig sind.

Die Plattenform der Wärmespeichereinheiten 31 bis 36 kann sich somit durch die Plattenform der verwendeten Metallplatten ergeben. Hingegen können die Wärmetauschereinheiten 51 bis 54 und die elektrischen Heizeinheiten 11 bis 13 ihre Plattenform durch einen Wärmeleitkörper erhalten, welcher aus einem Festkörper, insbesondere einem Metall wie Stahl oder einer Stahllegierung besteht. Dies wird im Späteren näher beschrieben.

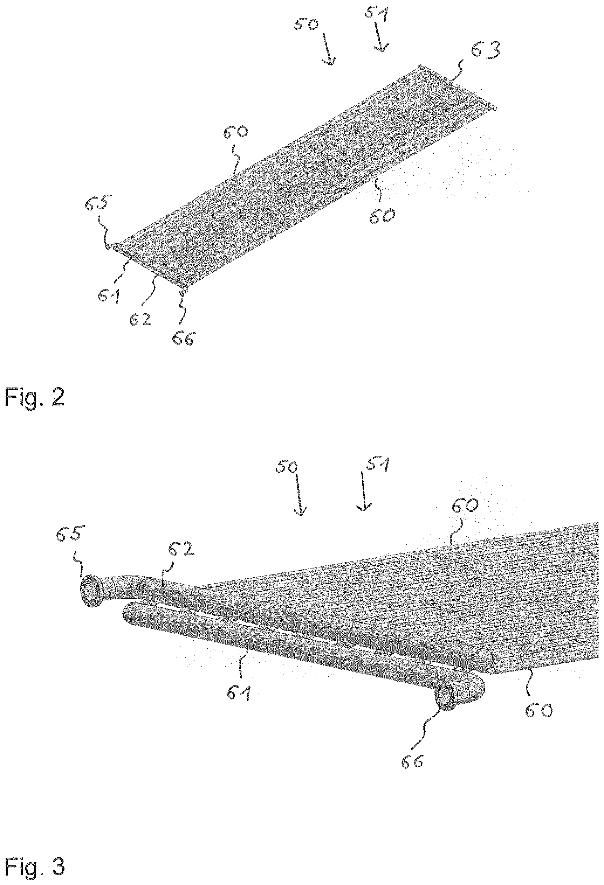

Zunächst wird in Fig. 2 ein wesentlicher Teil einer Wärmetauschereinheit 51 in einer Perspektivdarstellung gezeigt. Ein vergrößerter Ausschnitt hiervon ist in Fig. 3 gezeigt. Jede Wärmetauschereinheit kann wie die dargestellte Wärmetauschereinheit 51 gebildet sein. Diese umfasst mehrere Leitungen 60, welche von Arbeitsfluid durchströmt werden. Das Arbeitsfluid, beispielsweise Wasser oder ein Wasser enthaltendes Gemisch, kann dadurch Wärme von den Wärmespeichereinheiten aufnehmen. Die Leitungen 60 können gerade Röhren sein, welche parallel zueinander angeordnet sind und sich in Längsrichtung der Plattenform erstrecken. Arbeitsfluid wird zunächst über einen Fluidanschluss 66 in eine Verteilerzuführleitung 61 geleitet. Diese erstreckt sich quer zu den Leitungen 60 und verteilt das Arbeitsfluid auf mehrere der Leitungen 60. Auf dem zur Verteilerzuführleitung 61 gegenüberliegenden Ende der Leitungen 60 befindet sich ein Sammelrohr 63, welches mit allen Leitungen 60 verbunden ist. Die Verteilerzuführleitung 61 ist hingegen nur mit einigen, beispielsweise der Hälfte, der Leitungen 60 verbunden. So strömt das Arbeitsfluid durch einige der Leitungen 60 bis zum Sammelrohr 63 und sodann über die übrigen Leitungen 60 zurück, wo es in eine Verteilerabführleitung 62 gelangt, welche nur mit denjenigen Leitungen 60 verbunden ist, die nicht mit der Verteilerzuführleitung 61 verbunden sind. Die Verteilerabführleitung 62 befindet sich vorzugsweise oberhalb der Verteilerzuführleitung 61. Dies ist für die Strömungsführung vorteilhaft, da das Arbeitsfluid in den Leitungen 60 verdampfen kann und der Dampf nach oben in Richtung der Verteilerabführleitung 62 aufsteigt. Aus der Verteilerabführleitung 62 tritt das Arbeitsfluid schließlich über einen Fluidanschluss 65 aus.

Die Leitungen 60 bilden zusammen eine Plattenform oder decken jedenfalls einen plattenförmigen Bereich ab, womit ein effektiver Wärmeübertrag über die gesamte Plattenfläche möglich ist.

Die Leitungen 60 an sich können jedoch einen runden Querschnitt haben, womit eine Kontaktfläche zu einer benachbarten Wärmespeichereinheit noch keine ebene Plattenfläche bildet. Dies ist aber für einen guten Wärmeübertrag gewünscht, wobei insbesondere Lufträume an den Leitungen 60 vermieden werden sollten oder zumindest klein sein sollten.

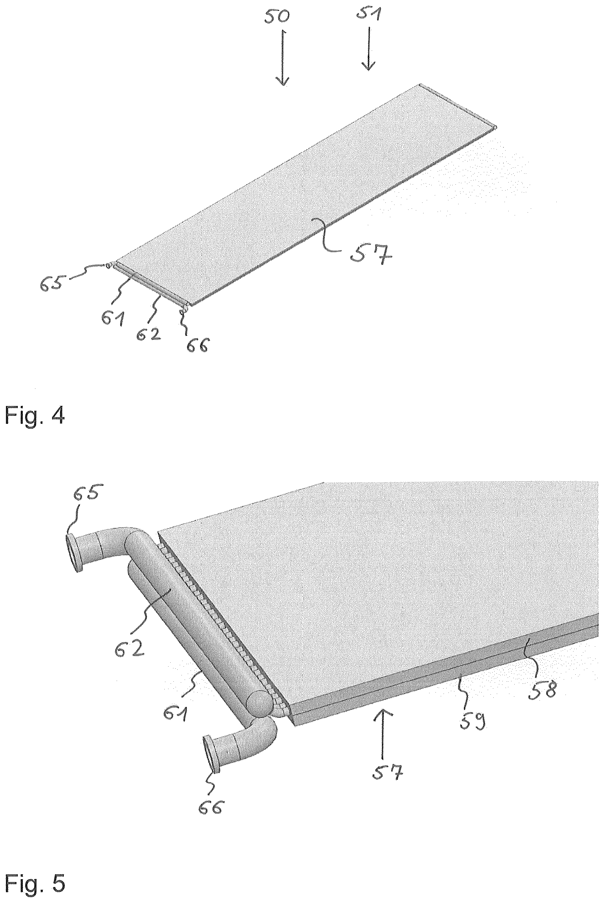

Dies wird erreicht, indem jede Wärmetauschereinheit einen Wärmeleitkörper 57 umfasst, wie schematisch in Fig. 4 gezeigt. Der Wärmeleitkörper 57 hat nach außen eine Plattenform, das heißt eine ebene Oberseite und eine ebene Unterseite, welche die benachbarten Wärmespeichereinheiten berühren. Nach innen hat der Wärmeleitkörper 57 einen Hohlraum oder Aufnahmeraum, welcher entsprechend den Leitungen 60 geformt ist. Dadurch kontaktieren die Leitungen 60 Innenflächen des Wärmeleitkörpers 57. Das Sammelrohr 63 sowie die Verteilerzuführleitung 61 und die Verteilerabführleitung 62 werden bei dem dargestellten Beispiel nicht von dem Wärmeleitkörper 57 umgeben, da ihre Höhen größer sind und ein Einschluss durch den Wärmeleitkörper 57 somit zu einer nachteilig großen Höhe führen würde.

Dies ist auch aus Fig. 5 ersichtlich, welche vergrößert einen Ausschnitt aus Fig. 4 zeigt.

Zudem ist in Fig. 5 dargestellt, dass der Wärmeleitkörper 57 einen oberen Wärmeleitkörper 58 und einen unteren Wärmeleitkörper 59 umfassen kann. Diese können aufeinandergelegt werden und dabei zwischeneinander die Leitungen 60 aufnehmen. Dies ist für eine kostengünstige Fertigung vorteilhaft.

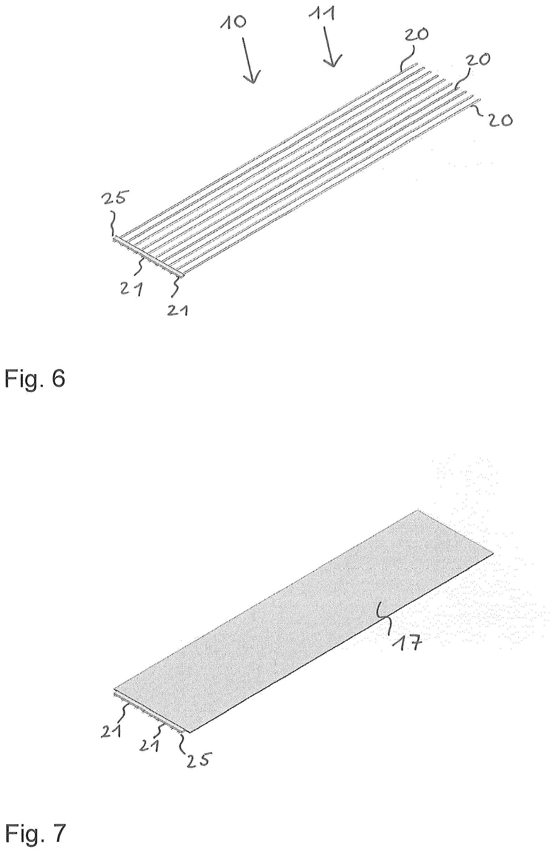

Eine der elektrischen Heizeinheiten 11 ist schematisch in Fig. 6 in einer Perspektivdarstellung gezeigt. Die übrigen Heizeinheiten können wiederum gleich zu dieser ausgeführt sein. Die elektrische Heizeinheit 11 umfasst mehrere elektrische Heizelemente 20. Diese können jeweils eine Stabform haben, die sich in Längsrichtung der Plattenform erstreckt. Die Heizelemente 20 können beispielsweise Widerstandselemente sein, bei denen aufgrund des elektrischen Widerstands ein durchfließender Strom zu einer Wärmeentwicklung führt. Die mehreren Heizelemente 20 können parallel zueinander verlaufen und sind innerhalb einer Ebene angeordnet, womit sich eine Plattenform ergibt beziehungsweise ein plattenförmiger Bereich abgedeckt wird. Dadurch wird über die gesamte Fläche der Plattenform Wärmeenergie abgegeben.

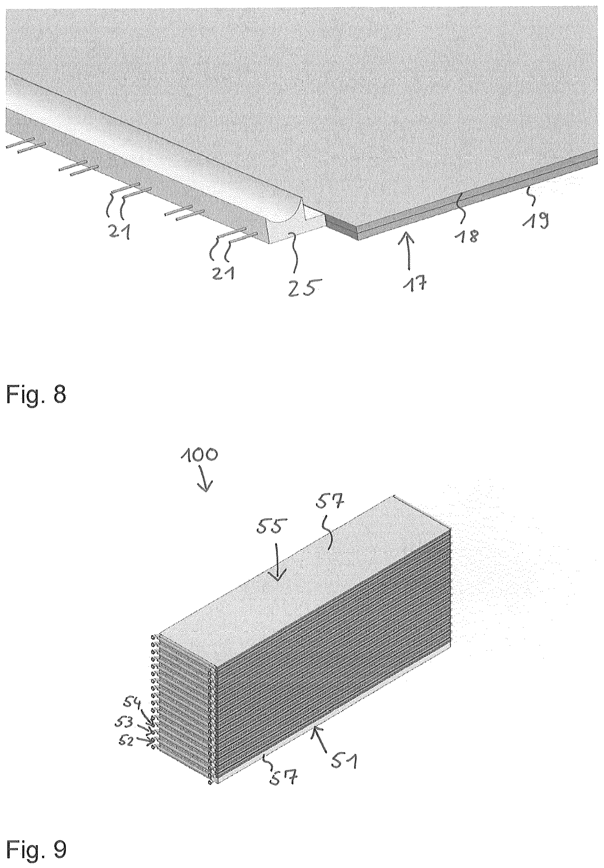

Auch die elektrischen Heizeinheiten 11 können über einen Wärmeleitkörper 17 verfügen, welcher schematisch in Fig. 7 gezeigt ist und analog zu den Wärmeleitkörpern der Wärmetauschereinheiten gebildet sein kann. Fig. 8 zeigt vergrößert einen Ausschnitt von Fig. 7. Wie dort ersichtlich, hat auch der Wärmeleitkörper 17 nach außen eine Plattenform, also insbesondere eine ebene Ober- und Unterseite. Im Inneren hat der Wärmeleitkörper 17 einen Aufnahmeraum, dessen Abmessungen den Abmessungen der Heizelemente 20 entsprechen. Der Wärmeleitkörper 17 kann aus einem oberen Wärmeleitkörper 18 und einem unteren Wärmeleitkörper 19 bestehen, welche aufeinandergesetzt werden und so die elektrischen Heizelemente aufnehmen.

Jedes der elektrischen Heizelemente 20 verfügt über elektrische Anschlüsse 21, welche sich außerhalb des Wärmeleitkörpers 17 befinden und der Stromzufuhr dienen. Dadurch kommt es zu einer großen Wärmeentwicklung an den Anschlüssen 21. Um Wärme abzuführen, ist bevorzugt ein Wärmeleitmittel 25 um die Anschlüsse 21 herum angeordnet. Das Wärmeleitmittel 25 kann insbesondere ein Metallkörper sein oder mehrere Metallkörper umfassen. Wie in Fig. 8 dargestellt, kann dieser den Wärmeleitkörper 17 berühren und an einer Seite eine nach innen gewölbte, konkave Form haben. Diese stellt eine Aufnahme für ein Rohr dar, durch welches Arbeitsfluid geleitet wird. Beispielsweise kann eine Verteilerzuführleitung in dieser Aufnahme angeordnet sein. Dadurch wird Wärmeenergie von den elektrischen Anschlüssen 21 auf das Arbeitsfluid in der angrenzenden Verteilerzuführleitung übertragen.

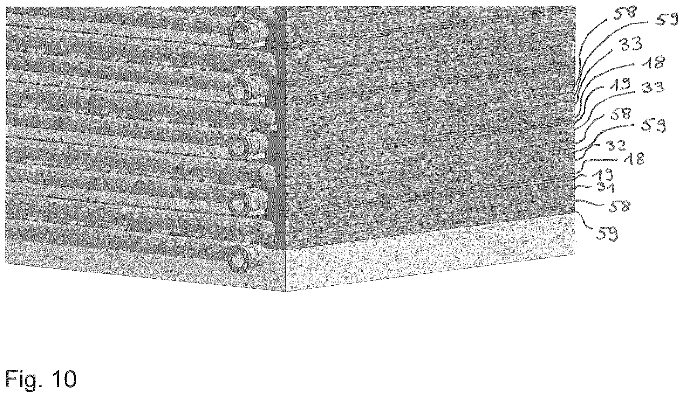

Ein Ausführungsbeispiel einer erfindungsgemäßen Wärmespeichervorrichtung 100 ist in einer Perspektivdarstellung in Fig. 9 gezeigt. Fig. 10 zeigt einen vergrößerten Ausschnitt hiervon. Wie dargestellt, sind vorzugsweise mehrere Stapeleinheiten übereinandergestapelt. Eine Größe der Stapelhöhe kann dadurch zwischen einer Größe der Breite und einer Größe der Länge der Grundfläche einer Plattenform liegen. Nach oben wird der Stapel durch einen Wärmeleitkörper 57 einer obersten Wärmetauschereinheit 55 abgeschlossen. In Fig. 10 ist zu sehen, dass die plattenförmigen Wärmespeichereinheiten 31 jeweils eine größere Höhe haben als die Wärmetauschereinheiten und die Heizeinheiten, von denen nach außen die oberen und unteren Wärmeleitkörper 58, 59, 18, 19 zu sehen sind.

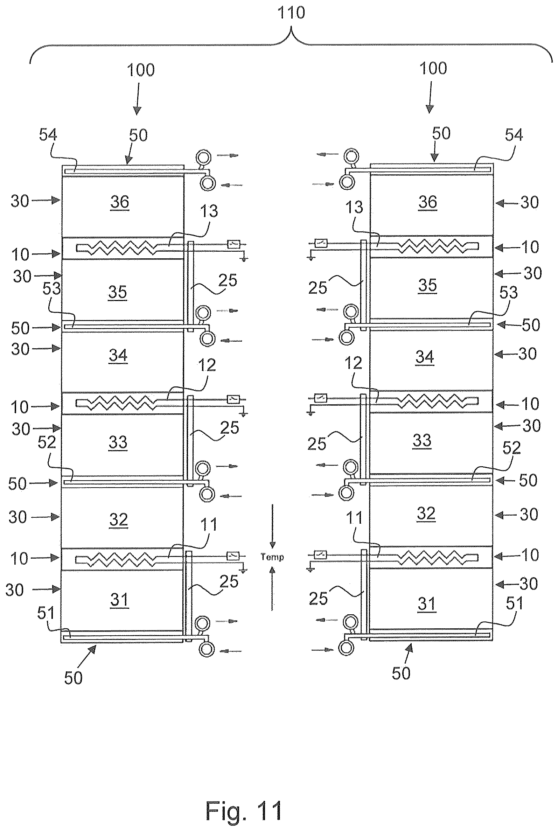

Die Erfindung umfasst außerdem ein Wärmespeichersystem, das aus mehreren Wärmespeichervorrichtungen besteht. Ein solches Wärmespeichersystem 110 ist schematisch in Fig. 11 dargestellt. Auf der linken Seite ist eine Wärmespeichervorrichtung 100 dargestellt, wobei sich benachbart zu dieser in die Zeichnungsebene hinein beziehungsweise aus dieser heraus weitere Wärmespeichervorrichtungen 100 befinden. Diese sind nebeneinander in einer ersten Reihe angeordnet. Die Reihe erstreckt sich in der Richtung der Breite der Plattenformen.

Zudem ist auf der rechten Seite in Fig. 11 eine weitere Wärmespeichervorrichtung 100 dargestellt, wobei in analoger Weise neben dieser weitere Wärmespeichervorrichtungen angeordnet sind, welche eine zweite Reihe ergeben, die sich parallel zur ersten Reihe erstreckt.

Die elektrischen Anschlüsse 21 sowie die Fluidanschlüsse 65, 66 von derselben Wärmespeichervorrichtung 100 sind alle an derselben Seite dieser Wärmespeichervorrichtung 100 angeordnet. Diese Seite kann eine Stirnseite sein, welche durch die Breiten der Plattenformen sowie die jeweiligen Höhen der Wärmespeichereinheiten, der Wärmetauschereinheiten und der Heizeinheiten gebildet ist. Diese Anordnung ist vorteilhaft für die Wartung und Zugänglichkeit der Wärmespeichervorrichtung 100.

Wie in Fig. 11 gezeigt, sind diese Stirnseiten der Wärmespeichervorrichtungen der ersten Reihe gerade den Stirnseiten der Wärmespeichervorrichtungen der zweiten Reihe zugewandt. Dadurch bilden die erste Reihe und zweite Reihe an Wärmespeichervorrichtungen 100 zwischeneinander einen Gang, von dem aus sämtliche Fluidanschlüsse 65, 66 und elektrischen Anschlüsse 21 aller Wärmespeichervorrichtungen zugänglich sind.

Durch die erfindungsgemäße Wärmespeichervorrichtung kann in kostengünstiger Weise eine große Energiemenge von elektrischer Form in Wärmeform umgewandelt und gespeichert werden.

## Patentansprüche

1. Wärmespeichervorrichtung zum Speichern von elektrischer Energie in Wärmeenergie,
mit elektrischen Heizmitteln (10) zum Umwandeln von elektrischer Energie in Wärmeenergie,
mit Wärmespeichermitteln (30) zum Aufnehmen und Speichern von Wärmeenergie der elektrischen Heizmittel (10),
mit Wärmetauschermitteln (50) zum Ausgeben von Wärmeenergie, welche Leitungen (60) für ein Arbeitsfluid aufweisen, zum Übertragen von Wärmeenergie von den Wärmespeichermitteln (30) auf das Arbeitsfluid,
wobei die Wärmetauschermittel (50) mindestens eine, vorzugsweise mehrere, plattenförmige Wärmetauschereinheiten (51-54) aufweisen, welche jeweils mehrere der Leitungen (60) für das Arbeitsfluid umfassen,
wobei die elektrischen Heizmittel (10) mindestens eine, vorzugsweise mehrere, plattenförmige elektrische Heizeinheiten (11-13) aufweisen,
**dadurch gekennzeichnet,**
**dass** die Wärmespeichermittel (30) mindestens eine, vorzugsweise mehrere, plattenförmige Wärmespeichereinheiten (31-36) aufweisen, wobei jede Wärmespeichereinheit (31-36) jeweils eine Metallplatte umfasst,
**dass** die mindestens eine plattenförmige Wärmetauschereinheit (51-54), die mindestens eine plattenförmige Wärmespeichereinheit (31-36) und die mindestens eine plattenförmige elektrische Heizeinheit (11-13) übereinander zu einem Stapel angeordnet sind.

2. Wärmespeichervorrichtung nach Anspruch 1,
**dadurch gekennzeichnet,**
**dass** die plattenförmigen Wärmespeichereinheiten (31-36), die plattenförmigen Wärmetauschereinheiten (51-54) und die plattenförmigen elektrischen Heizeinheiten (11-13) jeweils eine übereinstimmende Grundfläche aufweisen.

3. Wärmespeichervorrichtung nach Anspruch 1 oder 2,
**dadurch gekennzeichnet,**
**dass** die Länge der Grundfläche mindestens doppelt so groß ist wie die Breite der Grundfläche.

4. Wärmespeichervorrichtung nach einem der Ansprüche 1 bis 3,
**dadurch gekennzeichnet,**
**dass** die plattenförmigen Wärmespeichereinheiten (31-36), die plattenförmigen Wärmetauschereinheiten (51-54) und die plattenförmigen elektrischen Heizeinheiten (11-13) jeweils eine Höhe und eine Grundfläche aufweisen, wobei eine Breite und Länge der Grundfläche jeweils mindestens 5mal so groß ist wie die Höhe.

5. Wärmespeichervorrichtung nach einem der Ansprüche 1 bis 4,
**dadurch gekennzeichnet,**
**dass** der Stapel mehrere übereinander angeordnete Stapeleinheiten umfasst, wobei jede Stapeleinheit von unten nach oben die folgenden Komponenten umfasst:
- eine der plattenförmigen Wärmetauschereinheiten (51-54),
- eine der plattenförmigen Wärmespeichereinheiten (31-36),
- eine der plattenförmigen elektrischen Heizeinheiten (11-13),
- eine der plattenförmigen Wärmespeichereinheiten (31-36).

6. Wärmespeichervorrichtung nach Anspruch 5,
**dadurch gekennzeichnet,**
**dass** jede der plattenförmigen elektrischen Heizeinheiten (11-13) stets an zwei der plattenförmigen Wärmespeichereinheiten (31-36) angrenzt.

7. Wärmespeichervorrichtung nach einem der Ansprüche 1 bis 6,
**dadurch gekennzeichnet,**
**dass** der Stapel nach oben und nach unten durch jeweils eine der plattenförmigen Wärmetauschereinheiten (51, 54) begrenzt wird.

8. Wärmespeichervorrichtung nach einem der Ansprüche 1 bis 7,
**dadurch gekennzeichnet,**
**dass** jede elektrische Heizeinheit (11-13) mehrere elektrische Heizelemente (20) und einen Wärmeleitkörper (17) umfasst, wobei der Wärmeleitkörper (17) die elektrischen Heizelemente (20) direkt kontaktierend umgibt und eine Plattenform hat, und
**dass** jede Wärmetauschereinheit (51-54) Leitungen (60) für das Arbeitsfluid und ebenfalls einen Wärmeleitkörper (57) umfasst, welcher die Leitungen (60) direkt kontaktierend umgibt und eine Plattenform hat.

9. Wärmespeichervorrichtung nach Anspruch 8,
**dadurch gekennzeichnet,**
**dass** jeder Wärmeleitkörper (17) von einer der elektrischen Heizeinheiten (11-13) einen oberen Wärmeleitkörper (18) und einen unteren Wärmeleitkörper (19) umfasst, welche aufeinander gesetzt sind und dazwischen die elektrischen Heizelemente (20) aufnehmen und
**dass** jeder Wärmeleitkörper (57) von einer der Wärmetauschereinheiten (51-54) einen oberen Wärmeleitkörper (58) und einen unteren Wärmeleitkörper (59) umfasst, welche aufeinander gesetzt sind und dazwischen die Leitungen (60) für das Arbeitsfluid aufnehmen.

10. Wärmespeichervorrichtung nach einem der Ansprüche 1 bis 9,
**dadurch gekennzeichnet,**
**dass** jede elektrische Heizeinheit (11-13) elektrische Anschlüsse (21) aufweist, über welche elektrischer Strom von außen zu den elektrischen Heizelementen (20) leitbar ist, und
**dass** die elektrischen Anschlüsse (21) aller elektrischen Heizeinheiten (11-13) an einer selben Seitenwand der Wärmespeichervorrichtung und nicht nicht an einer Grundfläche einer Plattenform der Wärmespeichervorrichtung angeordnet sind, und
**dass** an jeder Wärmetauschereinheit (51-54) Fluidanschlüsse (65, 66) vorhanden sind, über welche Arbeitsfluid in die Leitungen (60) der jeweiligen Wärmetauschereinheit (51-54) hinein und wieder heraus leitbar ist, und
**dass** auch die Fluidanschlüsse (65, 66) aller Wärmetauschereinheiten (51-54) an der vorgenannten Seitenwand der Wärmespeichervorrichtung angeordnet sind.

11. Wärmespeichervorrichtung nach einem der Ansprüche 1 bis 10,
**dadurch gekennzeichnet,**
**dass** die Leitungen (60) jeder Wärmetauschereinheit (51-54) in Längsrichtung der Grundfläche verlaufen,
**dass** an jeder Wärmetauschereinheit (51-54) eine Verteilerzuführleitung (61) und eine Verteilerabführleitung (62) vorhanden sind,
**dass** bei jeder Wärmetauschereinheit (51-54) die Verteilerzuführleitung (61) mit einem Teil der Leitungen (60) verbunden ist und die Verteilerabführleitung (62) mit dem übrigen Teil der Leitungen (60) verbunden ist,
**dass** die Leitungen (60) auf einer der Verteilerzuführleitung (61) und der Verteilerabführleitung (62) gegenüberliegenden Seite durch ein Sammelrohr (63) miteinander verbunden sind.

12. Wärmespeichervorrichtung Anspruch 11,
**dadurch gekennzeichnet,**
**dass** das Sammelrohr (63), welches einen größeren Querschnitt als die Leitungen (60) hat, außerhalb der plattenförmigen Wärmetauschereinheiten (51-54) angeordnet ist und somit außerhalb der Grundfläche, welche durch die plattenförmigen Wärmetauschereinheiten (51-54) und die plattenförmigen elektrischen Heizeinheiten (11-13) gegeben ist.

13. Wärmespeichervorrichtung nach einem der Ansprüche 1 bis 12,
**dadurch gekennzeichnet,**
**dass** an jeder elektrischen Heizeinheit (11-13) elektrische Anschlüsse (21) vorgesehen sind und
**dass** zur Wärmeableitung von den elektrischen Anschlüssen (21) ein Wärmeleitmittel (25) die elektrischen Anschlüsse (21) umgibt und Arbeitsfluidrohre kontaktiert, die mit den Leitungen (60) für das Arbeitsfluid verbunden sind.

14. Wärmespeichersystem,
**dadurch gekennzeichnet,**
**dass** mehrere in einer ersten Reihe und mehrere in einer zweiten Reihe angeordnete Wärmespeichervorrichtungen nach einem der Ansprüche 10 bis 13 vorhanden und so angeordnet sind, dass eine Seite der ersten Reihe, an welcher sich die elektrischen Anschlüsse (21) und die Fluidanschlüsse (65, 66) der Wärmespeichervorrichtungen der ersten Reihe befinden, gerade einer Seite der zweiten Reihe, an welcher sich die elektrischen Anschlüsse (21) und die Fluidanschlüsse (65, 66) der Wärmespeichervorrichtungen der zweiten Reihe befinden, gegenüberliegt.

15. Verfahren zum Betreiben einer Wärmespeichervorrichtung zum Speichern von elektrischer Energie in Wärmeenergie,
bei dem mit elektrischen Heizmitteln (10) elektrische Energie in Wärmeenergie umgewandelt wird,
bei dem mit Wärmespeichermitteln (30) Wärmeenergie der elektrischen Heizmittel (10) aufgenommen und gespeichert wird,
bei dem mit Wärmetauschermitteln (50), welche Leitungen (60) für ein Arbeitsfluid aufweisen, Wärmeenergie von den Wärmespeichermitteln (30) auf das Arbeitsfluid übertragen wird,
**dadurch gekennzeichnet,**
**dass** die Wärmetauschermittel (50) mindestens eine, vorzugsweise mehrere, plattenförmige Wärmetauschereinheiten (51-54) aufweisen, welche jeweils mehrere der Leitungen (60) für Arbeitsfluid enthalten,
**dass** die Wärmespeichermittel (30) mindestens eine, vorzugsweise mehrere, plattenförmige Wärmespeichereinheiten (31-36) aufweisen, wobei jede Wärmespeichereinheit (31-36) jeweils eine Metallplatte umfasst,
**dass** die elektrischen Heizmittel (10) mindestens eine, vorzugsweise mehrere, plattenförmige elektrische Heizeinheiten (11-13) aufweisen,
**dass** die mindestens eine plattenförmige Wärmetauschereinheit (51-54), die mindestens eine plattenförmige Wärmespeichereinheit (31-36) und die mindestens eine plattenförmige elektrische Heizeinheit (11-13) übereinander zu einem Stapel angeordnet sind.

## Claims

1. Heat storage device for storing electrical energy as heat energy, comprising electrical heating means (10) for converting electrical energy in heat energy, heat storage means (30) for receiving and storing heat energy from the electrical heating means (10),
heat exchanger means (50) for discharging heat energy, comprising working fluid conduct lines (60) for transferring heat energy from the heat storage means (30) to the working fluid,
wherein the heat exchanger means (50) comprise at least one, preferably several, plate-shaped heat exchanger units (51-54) each comprising several of the working fluid conduct lines (60),
wherein the electrical heating means (10) comprise at least one, preferably several, plate-shaped electrical heating units (11-13),
**characterIzed in that**
the heat storage means (30) comprise at least one, preferably several, plate-shaped heat storage units (31-36), the heat storage units (31-36) each comprising a metal plate,
the at least one plate-shaped heat exchanger unit (51-54), the at least one plate-shaped heat storage unit (31-36), and the at least one plate-shaped electrical heating unit (11-13) are arranged on top of each other to form a stack.

2. Heat storage device according to claim 1,
**characterIzed in that**
the plate-shaped heat storage units (31-36), the plate-shaped heat exchanger units (51-54), and the plate-shaped electrical heating units (11-13) all have a common ground area.

3. Heat storage device according to claim 1 or 2,
**characterIzed in that**
the length of the ground area is at least double as large as the width of the ground area.

4. Heat storage device according to any one of the claims 1 to 3,
**characterIzed in that**
the plate-shaped heat storage units (31-36), the plate-shaped heat exchanger units (51-54) and the plate-shaped electrical heating units (11-13) each have a height and a ground area, wherein a width and length of the ground area are each at least 5 times as large as the height.

5. Heat storage device according to any one of the claims 1 to 4,
**characterIzed in that**
the stack comprises a plurality of stack units arranged on top of each other, wherein each stack unit comprises the following components, from bottom to top:
- one of the plate-shaped heat exchanger units (51-54),
- one of the plate-shaped heat storage units (31-36),
- one of the plate-shaped electrical heating units (11-13),
- one of the plate-shaped heat storage units (31-36).

6. Heat storage device according to claim 5,
**characterIzed in that**
each of the plate-shaped electrical heating units (11-13) adjoins two of the plate-shaped heat storage units (31-36).

7. Heat storage device according to any one of the claims 1 to 6,
**characterIzed in that**
the stack terminates at its top and bottom with one of the plate-shaped heat exchanger units (51, 54), respectively.

8. Heat storage device according to any one of the claims 1 to 7,
**characterIzed in that**
each electrical heating unit (11-13) comprises a plurality of electrical heating elements (20) and a heat transfer body (17), wherein the heat transfer body (17) surrounds and directly contacts the electrical heating elements (20) and has a plate shape, and
each heat exchanger unit (51-54) comprises conduct lines (60) for the working fluid and also a heat transfer body (57) which surrounds and directly contacts the conduct lines (60) and has a plate shape.

9. Heat storage device according to claim 8,
**characterIzed in that**
each heat transfer body (17) of one of the electrical heating units (11-13) comprises an upper heat transfer body (18) and a lower heat transfer body (19) which are arranged on top of each other and receive the electrical heating elements (20) therebetween, and
each heat transfer body (57) of one of the heat exchanger units (51-54) comprises an upper heat transfer body (58) and a lower heat transfer body (59) which are arranged on top of each other and receive the working fluid conduct lines (60) therebetween.

10. Heat storage device according to any one of the claims 1 to 9,
**characterIzed in that**
each electrical heating unit (11-13) comprises electrical connections (21) through which the electrical heating elements (20) can be supplied with an electrical current from an external supply, and
the electrical connections (21) of all electrical heating units (11-13) are arranged at a common side wall of the heat storage device and are not arranged at a ground area of a plate shape of the heat storage device, and
fluid connectors (65, 66) are provided at each heat exchanger unit (51-54), wherein working fluid can be guided through the fluid connectors (65, 66) into and then out of the conduct lines (60) of the respective heat exchanger unit (51-54), and
also the fluid connectors (65, 66) of all heat exchanger units (51-54) are arranged at said side wall of the heat storage device.

11. Heat storage device according to any one of the claims 1 to 10,
**characterIzed in that**
the conduct lines (60) of all heat exchanger units (51-54) extend in a longitudinal direction of the ground area,
a distribution supply line (61) and a distribution drain line (62) are provided at each heat exchanger unit (51-54),
at each heat exchanger unit (51-54), the distribution supply line (61) connects to some of the conduct lines (60) and the distribution drain line (62) connects to the remaining conduct lines (60),
the conduct lines (60) are connected with other each through an accumulating pipe (63) at a side opposite the distribution supply line (61) and the distribution drain line (62).

12. Heat storage device according to claim 11,
**characterIzed in that**
the accumulating pipe (63) has a larger cross-section than the conduct lines (60), the accumulating pipe (63) is arranged outside the plate-shaped heat exchanger units (51-54) and thus outside the ground area defined by the plate-shaped heat exchanger units (51-54) and the plate-shaped electrical heating units (11-13).

13. Heat storage device according to any one of the claims 1 to 12,
**characterIzed in that**
electrical connections (21) are provided at each electrical heating unit (11-13) and,
for heat dissipation from the electrical connections (21), a heat transfer means surrounds (25) the electrical connections (21) and engages working fluid pipes connected with the working fluid conduct lines (60).

14. Heat storage system,
**characterIzed in that**
a plurality of heat storage devices according to one of the claims 10 to 13 are arranged in a first row and a second row such that the electrical connections (21) and the fluid connections (65, 66) of the heat storage devices of the first row are provided at a side of the first row which is just opposite the side of the second row at which the electrical connections (21) and the fluid connections (65, 66) of the heat storage devices of the second row are provided.

15. Method for operating a heat storage device for storing electrical energy as heat energy, comprising
converting electrical energy in heat energy with electrical heating means (10), receiving and storing heat energy from the electrical heating means (10) with heat storage means (30),
transferring heat energy from the heat storage means (30) to a working fluid with heat exchanger means (50) comprising working fluid conduct lines (60),
**characterIzed in that**
the heat exchanger means (50) comprise at least one, preferably several, plate-shaped heat exchanger units (51-54) each comprising a plurality of the working fluid conduct lines (60),
the heat storage means (30) comprise at least one, preferably several, plate-shaped heat storage units (31-36), the heat storage units (31-36) each comprising a metal plate,
the electrical heating means (10) comprise at least one, preferably several, plate-shaped electrical heating units (11-13),
the at least one plate-shaped heat exchanger unit (51-54), the at least one plate-shaped heat storage unit (31-36), and the at least one plate-shaped electrical heating unit (11-13) are arranged on top of each other to form a stack.

## Revendications

1. Dispositif de stockage de chaleur pour stocker de l'énergie électrique en tant qu'énergie thermique
incluant des moyens de chauffage électrique (10) pour transformer de l'énergie électrique en énergie thermique,
incluant des moyens de stockage de chaleur (30) pour recevoir et stocker de l'énergie thermique des moyens de chauffage électrique (10),
incluant des moyens d'échange de chaleur (50) pour émettre de l'énergie thermique, qui comprennent des conduites (60) pour un fluide de travail pour transférer de l'énergie thermique des moyens de stockage de chaleur (30) vers le fluide de travail,
tandis que les moyens d'échange de chaleur (50) comprennent au moins une, préférablement plusieurs, unités d'échange de chaleur en forme de plaque (51-54) comprenant chacune plusieurs conduites (60) pour le fluide de travail,
tandis que les moyens de chauffage électrique (10) comprennent au moins une, préférablement plusieurs, unités de chauffage électrique en forme de plaque (11-13),
**caractérisé en ce que**
les moyens de stockage de chaleur (30) comprennent au moins une, préférablement plusieurs, unités de stockage de chaleur en forme de plaque (31-36), tandis chaque unité de stockage de chaleur (31-36) comprend une plaque de métal,
la au moins une unité d'échange de chaleur en forme de plaque (51-54), la au moins une unité de stockage de chaleur en forme de plaque (31-36) et la au moins une unité de chauffage électrique en forme de plaque (11-13) sont agencés les unes sur les autres pour former un empilement.

2. Dispositif de stockage de chaleur selon la revendication 1
**caractérisé en ce que**
les unités de stockage de chaleur en forme de plaque (31-36), les unités d'échange de chaleur en forme de plaque (51-54) et les unités de chauffage électrique en forme de plaque (11-13) présentent chacune une surface commune.

3. Dispositif de stockage de chaleur selon la revendication 1 ou 2,
**caractérisé en ce que**
la longueur de la surface est au moins deux fois plus grande que la largeur de la surface.

4. Dispositif de stockage de chaleur selon une des revendications 1 à 3
**caractérisé en ce que**
les unités de stockage de chaleur en forme de plaque (31-36), les unités d'échange de chaleur en forme de plaque (51-54) et les unités de chauffage électrique en forme de plaque (11-13) ont chacune une hauteur et une surface, tandis qu'une largeur et longueur de la surface sont chacune au moins 5 fois plus grande que la hauteur.

5. Dispositif de stockage de chaleur selon une des revendications 1 à 4
**caractérisé en ce que**
l'empilement comprend plusieurs unités d'empilement agencées les unes sur les autres, tandis que chaque unité d'empilement comprend, de bas en haut, les composants suivants :
- une des unités d'échange de chaleur en forme de plaque (51-54),
- une des unités de stockage de chaleur en forme de plaque (31-36),
- une des unités de chauffage électrique en forme de plaque (11-13),
- une des unités de stockage de chaleur en forme de plaque (31-36).

6. Dispositif de stockage de chaleur selon la revendication 5
**caractérisé en ce que**
chacune des unités de chauffage électrique en forme de plaque (11-13) jouxte toujours deux des unités de stockage de chaleur en forme de plaque (31-36).

7. Dispositif de stockage de chaleur selon une des revendications 1 à 6
**caractérisé en ce que**
l'empilement se termine en haut et en bas par, respectivement, une des unités d'échange de chaleur en forme de plaque (51, 54).

8. Dispositif de stockage de chaleur selon une des revendications 1 à 7
**caractérisé en ce que**
chaque unité de chauffage électrique (11-13) comprend plusieurs éléments de chauffage électrique (20) et un corps conducteur de chaleur (17), tandis que le corps conducteur de chaleur (17) entoure les éléments de chauffage électrique (20) en contact direct et a une forme de plaque, et
chaque unité d'échange de chaleur (51-54) comprend des conduites (60) pour le fluide de travail et également un corps conducteur de chaleur (57), lequel entoure les conduites (60) en contact direct et a une forme de plaque.

9. Dispositif de stockage de chaleur selon la revendication 8
**caractérisé en ce que**
chaque corps conducteur de chaleur (17) d'une des unités de chauffage électrique (11-13) comprend un corps conducteur de chaleur supérieur (18) et un corps conducteur de chaleur inférieur (19), lesquels sont placés les uns sur les autres et reçoivent les éléments de chauffage électrique (20) entre eux et
chaque corps conducteur de chaleur (57) d'une des unités d'échange de chaleur (51-54) comprend un corps conducteur de chaleur supérieur (58) et un corps conducteur de chaleur inférieur (59), lesquels sont placés les uns sur les autres et reçoivent les conduites (60) pour le fluide de travail entre eux.

10. Dispositif de stockage de chaleur selon une des revendications 1 à 9
**caractérisé en ce que**
chaque unité de chauffage électrique (11-13) comprend des connexions électriques (21) via lesquelles du courant électrique venant de l'extérieur peut être conduit vers les éléments de chauffage électrique (20), et
les connexions électriques (21) de toutes les unités de chauffage électrique (11-13) sont agencées sur une même paroi latérale du dispositif de stockage de chaleur et non pas sur une surface d'une forme de plaque du dispositif de stockage de chaleur, et
des connecteurs de fluide (65, 66) sont fournis à chaque unité d'échange de chaleur (51-54), tandis que du fluide de travail peut être conduit via les connecteurs de fluide (65, 66) dans les conduites puis ressorti des conduites (60) de l'unité d'échange de chaleur (51-54) respective, et
les connecteurs de fluide (65, 66) de toutes les unités d'échange de chaleur (51-54) sont agencés à ladite paroi latérale du dispositif de stockage de chaleur.

11. Dispositif de stockage de chaleur selon les revendications 1 à 10
**caractérisé en ce que**
les conduites (60) de toutes les unités d'échange de chaleur (51-54) s'étendent dans une direction longitudinale de la surface,
une conduite d'alimentation de distribution (61) et une conduite de drainage de distribution (62) sont fournies à chaque unité d'échange de chaleur (51-54),
à chaque unité d'échange de chaleur (51-54), la conduite d'alimentation de distribution (61) est connectées à certaines des conduites (60) et la conduite de drainage de distribution (62) est connectée aux conduites restantes (60),
les conduites (60) sont connectées les unes aux autres via une conduite d'accumulation (63) sur un côté opposé à la conduite d'alimentation de distribution (61) et la conduite de drainage de distribution (62).

12. Dispositif de stockage de chaleur selon la revendication 11
**caractérisé en ce que**
le tuyau collecteur (63), lequel a une plus grande coupe transversale que les conduites (60), est agencé en dehors des unités d'échange de chaleur en forme de plaque (51-54) et ainsi en dehors de la surface définie par les unités d'échange de chaleur en forme de plaque (51-54) et les unités de chauffage électrique en forme de plaque (11-13).

13. Dispositif de stockage de chaleur selon une des revendications 1 à 12
**caractérisé en ce que**
des connexions électriques (21) sont fournies à chaque unité de chauffage électrique (11-13) et
pour la dissipation de la chaleur des connexions électriques (21), un moyen thermoconducteur (25) entoure les connexions électriques (21) et est en contact avec des tuyaux de fluide de travail qui sont reliés aux conduites (60) pour le fluide de travail.

14. Système de stockage de chaleur
**caractérisé en ce que**
plusieurs dispositifs de stockage de chaleur selon une des revendications 10 à 13 agencés dans une première rangée et dans une deuxième rangée sont fournis et agencés de sorte qu'un côté du premier rang, auquel se trouve les connexions électriques (21) et les connexions fluidiques (65, 66) des dispositifs de stockage de chaleur de la première rangée, se trouve juste à l'opposé du deuxième côté, auquel se trouvent les connexions électriques (21) et les connexions fluidiques (65, 66) des dispositifs de stockage de chaleur de la deuxième rangée.

15. Procédé pour le fonctionnement d'un dispositif de stockage de chaleur pour stocker de l'énergie électrique en tant qu'énergie thermique,
par lequel de l'énergie électrique est transformée en énergie thermique grâce à des moyens de chauffage électrique (10),
par lequel, grâce à des moyens de stockage de chaleur (30), de l'énergie thermique des moyens de chauffage électrique (10) est reçue et stockée,
par lequel, grâce à des moyens d'échange de chaleur (50) comprenant des conduites (60) pour un fluide de travail, de l'énergie thermique est transférée des moyens de stockage de la chaleur (30) vers le fluide de travail,
**caractérisé en ce que**
les moyens d'échange de chaleur (50) comprennent au moins une, préférablement plusieurs, unités d'échange de chaleur en forme de plaque (51-54) contenant chacune plusieurs des conduites (60) pour fluide de travail,
les moyens de stockage de chaleur (30) comprennent au moins une, préférablement plusieurs, unités de stockage de chaleur en forme de plaque (31-36), tandis que chaque unité de stockage de chaleur (31-36) comprend respectivement une plaque de métal,
les moyens de chauffage électrique (10) comprennent au moins une, préférablement plusieurs, unités de chauffage électrique en forme de plaque (11-13),
la au moins une unité d'échange de chaleur en forme de plaque (51-54), la au moins une unité de stockage de chaleur en forme de plaque (31-36) et la au moins une unité de chauffage électrique en forme de plaque (11-13) sont agencés les unes sur les autres pour former un empilement.
